# EUROPEAN PATENT SPECIFICATION

(11) **EP 3 689 802 B1**
(45) Date of publication and mention of the grant of the patent: **30.03.2022**
(21) Application number: 20155165.2
(22) Date of filing: 03.02.2020
(51) Int. Cl.: B65H 19/10, B65H 19/18, C09J 7/29

(54) **SPLICING TAPE**
KLEBEBAND
BANDE D'ÉPISSAGE

(30) Priority: 04.02.2019 IT 201900001581
(43) Date of publication of application: 05.08.2020
(73) Proprietor: Boston Tapes Commercial Srl, 81037 Sessa Aurunca (CE) (IT)
(72) Inventor: CRISCUOLO, Giovanna, 81037 SESSA AURUNCA (CE) (IT); SEPE, Antonio, 81037 SESSA AURUNCA (CE) (IT)
(74) Representative: Tiburzi, Andrea

(56) References cited:
- EP-A1- 1 640 301
- EP-A2- 2 578 653
- EP-B1- 1 640 301
- US-B2- 8 287 973

## Description

### Technical field of the invention

The present invention relates to an adhesive tape to be used for automatic change operations of sheet material rolls, such as for example paper or plastic material rolls.

More specifically, the invention relates to the structure of an adhesive tape which guarantees the bonding between a new roll and an expiring roll during the format changing step, or roll changing step, of an automated industrial process, in particular printing processes, on paper or on plastic film, whether it is offset, or rotogravure, or flexographic printing.

### State of the art

Coupling tapes which allow automatic coupling, the so-called "flying" splices, between sheet material rolls, are known.

The operating mode of the " flying" splice has passed and replaced the so-called "static" splice, where the change between the two rolls, the new one and the one being processed (expiring), used to be done interrupting the printing process and gluing the rolls manually leading one roll to the other.

In automatic coupling, by means of the "flying" splice, the gluing between the rolls takes place without changing the speed of the printing process (for example, 500-1200 m/min). This way, a considerable amount of time is saved, both during the splice preparation step and in the gluing step, with positive implications on productivity.

This type of automatic splices, so-called "flying" splices, are also called "flying splices".

The conventional method to obtain the splice automatically, through the usage of breakable tabs is described in patent WO95/29115.

The latter involves the usage of an adhesive tape with high tacky characteristics (instant capacity of the adhesive tape to adhere to the surface with which it is coupled), to be applied on the new roll, more precisely on the outer paper turn; while the fixing of the outer turn of the new roll is carried out by labels that break once the gluing between the two rolls has taken place.

This procedure to automatically obtain the splice has been largely overcome by the new technology that involves the usage of double-sided tapes, so as to reduce the steps to obtain the splice.

A first type of integrated tape for automatic splicing is described in patent EP 106 21 73.

This tape consists in a plurality of different material layers coupled together and provides splitting interfaces configured to allow, once the coupling between the rolls is done, a delamination between the layers. Document US 8 287 973 discloses integrated tape with a splitting section based on polymeric composite layer. Document EP 2 578 653 discloses integrated tape with a splitting section based on mixture of two components, wherein the first component might be ethylene-vinyl acetate.

A disadvantage of flying splice tapes of known types is that the delamination between the layers is not foreseeable as a not homogeneous detachment between the layers could occur.

A further disadvantage is that a non-constant splitting force can cause, in addition to causing undesired stresses on the sheet material, deformation or breakage of one or more layers of the tape being split or of the sheet material to be spliced.

A still further disadvantage is that many tapes of the prior art use detaching substances between some layers, to allow splitting, and the residues of these substances on the split surfaces are damaging for the correct functioning of the production rollers with which they come into contact during the process.

### Summary of the invention

Therefore, the technical problem posed and solved by the present invention is that of providing a double-sided splicing tape which overcomes the drawbacks of the prior art above described, allowing a splice between a sheet material roll and a further sheet material, in particular in machines that require an automatic roll change operation.

This problem is solved by a splicing tape according to claim 1 and by a splicing method according to claim 11.

Preferred features of the present invention are subject of the depending claims.

The present invention has some significant advantages.

In particular, the object according to the present invention allows to reduce the waste of material during the splicing phase of two sheet material rolls.

Advantageously, the specific structure of the tape according to the present invention allows to obtain a uniform splitting in such a way as to reduce the occurrence of unexpected stress peaks which can lead to deformations and breakages of the sheet material or of the tape.

A further advantage is that the object according to an embodiment of the present invention allows an automatic inductive detection of the splicing portion containing the tape, thus allowing to automate the cutting and removal phase of the splicing portion of the sheet material.

Other advantages, features and methods of use of the present invention will be evident from the following detailed description of some embodiments, presented by way of a non-limiting example.

### Brief description of the drawings

Reference will be made to the figures of the attached drawings in which:
Figure 1 shows a perspective view of a first embodiment of the tape according to the present invention;
Figure 2 shows a perspective view of a second embodiment of the tape according to the present invention;
Figure 3 shows a perspective view of the tape in Figure 1, or of the tape in Figure 2, applied on a sheet material roll;
Figure 4 shows a perspective view of the tape in Figure 3, in a configuration of partial lifting of an outer layer;
Figure 5 shows a perspective view of the tape of Figure 3, in a configuration of coupling with an ending edge of the outer turn of the sheet material roll;
Figure 6 shows a perspective view of the tape in Figure 3, in a configuration of partial lifting of a further outer layer;
Figure 7 shows a perspective view of the tape in Figure 3, in a configuration prior to the coupling between the sheet material of the roll on which the tape is applied and an additional sheet material;
Figure 8 shows a perspective view of the tape in Figure 2, in a coupling configuration between the sheet material of the roll on which the tape is applied and the additional sheet material;
Figure 9 shows a side view of the coupling in Figure 8;
Figure 9a shows an enlargement of a detail of Figure 9;
Figure 10 shows the side view of Figure 9 in a configuration of partial splitting of the tape;
Figure 10a shows an enlargement of a detail of Figure 10;
Figure 11 shows a side view of a tape splitting configuration following the splicing between the two sheet materials;
Figure 12 shows a top view of a splicing portion between the sheet material of the roll on which the tape is applied and the additional sheet material.

In the various figures the similar parts will be indicated with the same numerical references.

### Detailed description of preferred embodiments

With reference to the Figures, a splicing tape according to a first embodiment of the present invention is designated as a whole with 100.

A further embodiment of the tape will be described below and designated as a whole with 101.

The splicing tape 100; 101 herein described is configured to splice a terminal edge portion of a sheet material roll B1, for example a new roll, to a further sheet material B2, for example of an expiring roll.

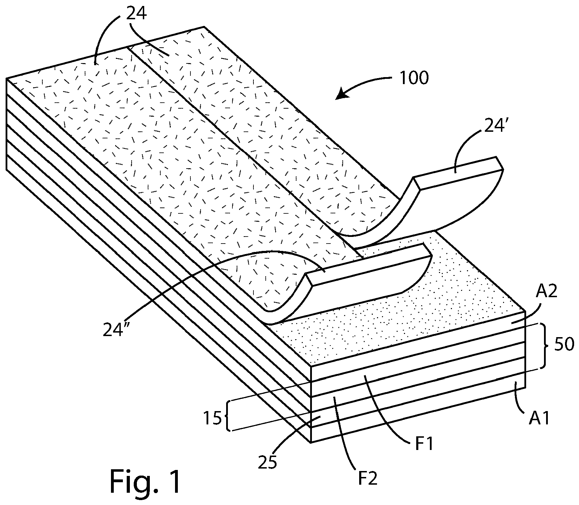

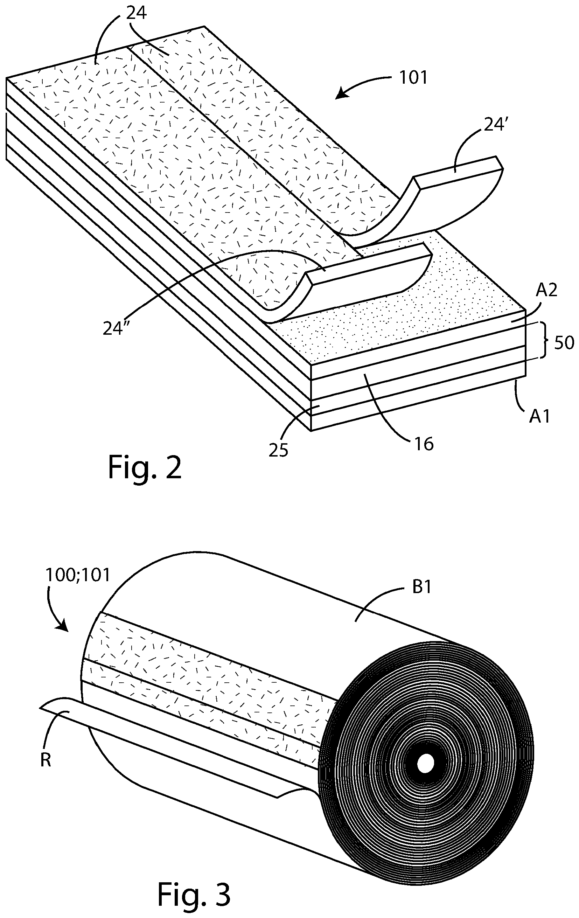

As shown in Figures 1 and 2, the splicing tape 100; 101 according to the present invention comprises: a first layer of adhesive material A1, configured to be coupled on a portion of the outer turn of the sheet material roll B1, a second layer of adhesive material A2, configured to be coupled to the further sheet material B2, and a splitting assembly 50, comprised between the first adhesive layer A1 and the second adhesive layer A2.

The splitting assembly 50 comprises a supporting layer 15; 16 and a polymeric material layer 25.

Advantageously, at least one of the two faces of the supporting layer 15; 16 is substantially planar and the layers of the splitting assembly 50 are arranged in such a way that the substantially planar face of the supporting layer 15; 16 faces, and in particular is coupled with, the layer of polymeric material 25.

As shown in figures 3 to 6, the overall configuration of the tape is such that, to perform a splicing operation of the sheet material B1 to the further sheet material B2, the tape is positioned so to make the first adhesive layer A1 adhere at a surface portion of the outer turn of the sheet material roll B1.

Preferably, the surface portion is defined close to an area under an ending edge portion R of the roll in such a way as to allow a coupling between the edge portion R and a first portion P1 of the second adhesive layer A2 of the tape 100; 101, as will be better described below.

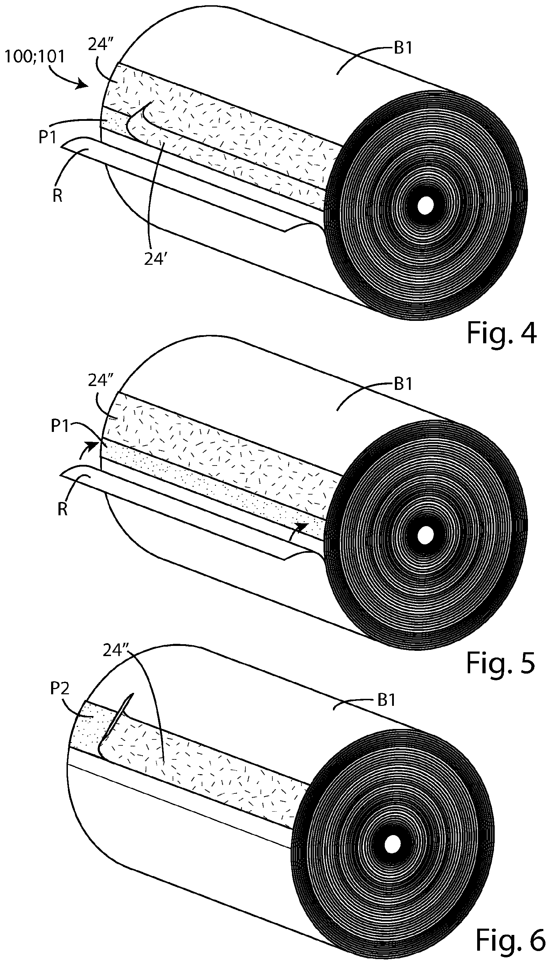

The remaining portion of tape, i.e. a second portion P2 of the second adhesive layer A2 - as shown for example in figures 6 to 8 - is coupled to the further sheet material B2 so that when an external force, due to a removal of the further sheet material B2 from the sheet material roll B1, overcomes an adhesion force between the metallic face of the supporting layer 15 and the polymeric layer 25, the splitting assembly 50 is split.

Advantageously, the coupling area between the further sheet material B2 and the tape 100; 101 (equal to the extension of the P2 portion) is larger than the coupling area between the tape and the sheet material B1 (equal to the extension of the P1 portion). In this way, an adhesion value is guaranteed such as to allow the maintenance of the coupling between the tape and the further sheet material B2 when the automatic advancement of the further sheet material B2 leads to the splitting of the splitting assembly 50.

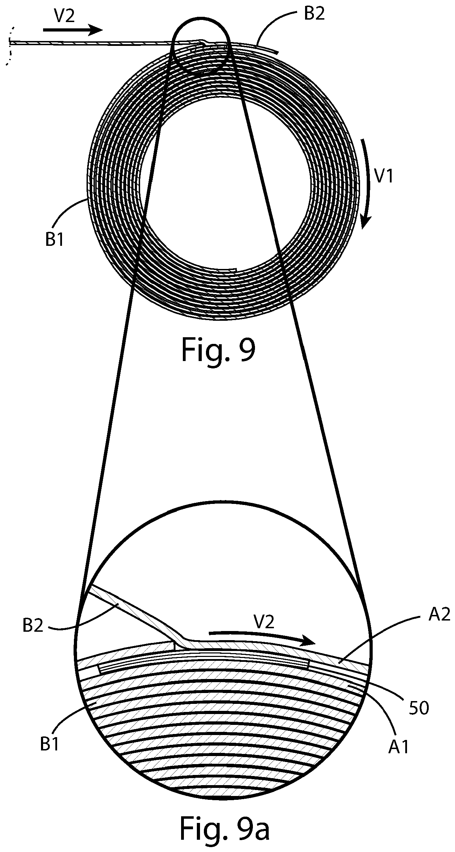

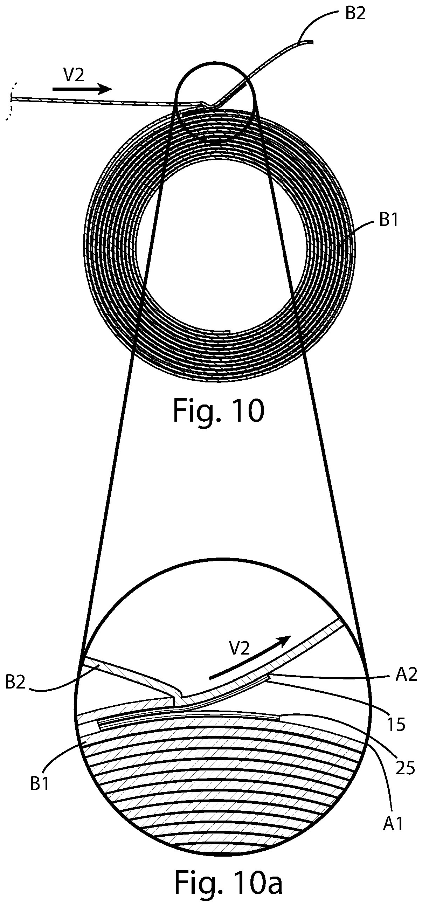

In particular, when the advancing force V2 of the further sheet material B2 - shown in figures 9 and 10 - exceeds the adhesion force between the substantially planar face of the supporting layer 15; 16 and the polymer layer 25, a splitting of the assembly 50 occurs.

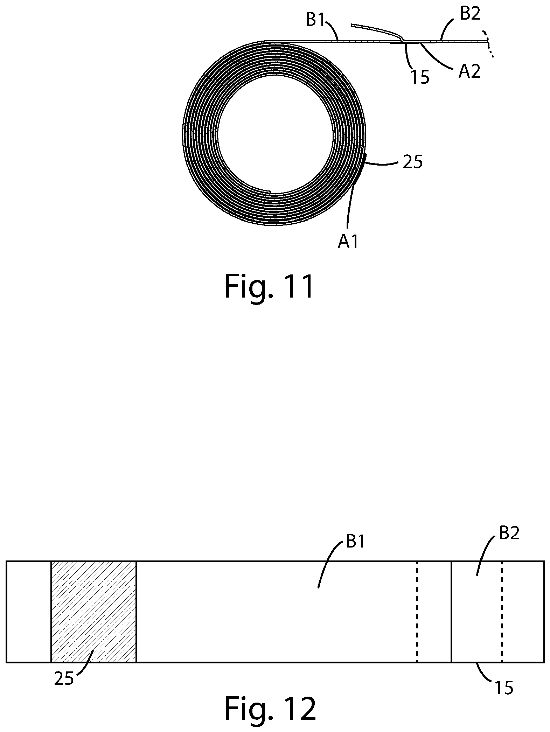

As shown in figures 11 and 12, after the splitting between the supporting layer 15; 16 and the polymeric layer 25, the two sheet materials B1 and B2 are spliced.

In particular, the two splitting surfaces, i.e. the substantially planar face of the supporting element 15; 16 and the face of the polymeric material layer 25 are located on opposite faces of the spliced tape.

In the example described here, the substantially planar face of the support element 15; 16 faces downwards at the splice between the two sheet materials B1 and B2, while the polymeric material face of the layer 25 faces upwards at a distance from the junction which depends, for example, on the diameter of the roll B1.

As will be better described hereinafter, once split, the polymeric layer 25 has "non-tacky", i.e. non-adhesive, characteristics.

Advantageously, both of the aforementioned splitting surfaces, that are the substantially planar face of the supporting element 15; 16 and the polymeric material face of the layer 25, once separated, have non- tacky capacity/ability and do not present any stickiness so to ensure the functioning of the automatic process.

Otherwise, indeed, surfaces having adhesive and/or sticky characteristics would adhere to the rollers of the printing systems causing resistance and unwanted breakage of the spliced materials.

Preferably, in a first embodiment of the tape 100 according to the present invention (shown in Figure 1) the supporting layer 15 comprises a laminar element F1 made of paper material coupled to a further metallic laminar element F2, for example made of aluminum.

In the example here described, the coupling between the laminar element F1 in paper material and the further laminar element F2 in aluminum takes place by lamination and the interposition of a layer of adhesive material can be provided.

Alternative embodiments provide a polymeric material laminar element F1 (for example PET, to give the tape different mechanical characteristics, depending on the material to be glued) or in non-transparent, in particular black colored, material.

Advantageously, the black color allows the possibility of detecting the position of the splice, for example when the unwinder system includes an optical detection system.

In particular, the uncoupled face of the paper material laminar element F1 supports the second layer of adhesive material A2, to which the mechanical properties of the supporting layer 15 will therefore be associated, ensuring its resistance in structural terms.

Advantageously, the use of a supercalendered paper for the element F1 allows to get a smooth and homogeneous finishing of the second layer of adhesive material A2, and at the same time guarantees the optimization of the coupling with the metallic material laminar element F2, avoiding the creation of grooves in which dust or air bubbles could hide, for example, which would ruin the homogeneous adhesion between the two coupled laminar elements F1 and F2.

The laminar element F2 made of metallic material, integrated into the tape 100 according to the present invention, acts as a contrast element to detect the position of the splice, for example in inductive systems installed on the unwinders of printing systems.

In the preferred embodiment, the aluminum laminar element F2 has a thickness of between 7-8 µm and acts as a splitting element together with the polymeric layer 25.

In a second embodiment of the tape 101 according to the present invention (shown in Figure 2) the supporting layer 16 is made of polymeric material, for example belonging to the group of polyesters, in particular it is made of polyethylene terephthalate (PET).

Preferably, the polyester supporting layer 16 has a thickness comprises between 30µm and 70 µm, in particular 50µm. Within this thickness range, it is preferred to define a higher thickness of the supporting layer 16 if a lower value of the delamination force, necessary for splitting the tape, is wanted.

Advantageously, a thickness of about 50µm guarantees the maintenance of the flatness of the support 16, necessary to proceed with the spreading of the adhesive layer.

At the same time, a thickness of about 50µm of the support 16 guarantees the absence of additional thickness in the roll splicing area, which otherwise could lead to malfunctions in an operating configuration.

The polymeric supporting layer 16, in particular polyethylene terephthalate (PET), can for example be added with dyes to make the roll splice area identifiable. For example, in cases where the unwinder of the system includes an optical detection system, it may be advantageous to make the layer 16 black so as to allow automatic detection of the position of the splicing area.

Advantageously, the supporting layer 16 in polymeric material gives the tape 101 flexibility values close to those of a polymeric film, allowing to optimize the tape splitting phases in applications for joining filmic material rolls, for example used in the flexible packaging sector.

For the same compatibility characteristics between the flexibility values of the splicing tape and the material to be spliced, the tape 100 comprising the support 15, having a metallic face, is preferable when rolls of paper material are to be spliced, for example rolls used in the printing industry for newspapers.

The polymeric layer 25 comprises a percentage of ethylene vinyl acetate (EVA) and a percentage of polyethylene (PE).

In the example here described, EVA and PE are mixed together and coextruded. The coextrusion of the polymeric material includes a final coupling phase of the coextruded material to the laminar element F2 in aluminum, in particular through a lamination process, in the absence of adhesive and/or detaching substances.

Advantageously, the ratio between the quantities of EVA and PE, and in particular the percentage of EVA inside the polymeric mixture defines the amount of the splitting degree between the polymeric layer 25 and the metallic laminar element F2 on the supporting layer 15. In fact, depending on the specific application, i.e. depending on whether more or less rigid sheet materials are to be spliced together, it will be preferable to obtain a higher or lower delamination force of the splitting assembly 50.

In particular, in the EVA and PE mixture described above, the percentage of EVA is between 2% and 15%. Advantageously, a higher percentage of EVA in the mixture implies a higher adhesion of the polymeric layer 25 and therefore a higher delamination force value.

For applications in which less rigid sheet materials must be joined together, it will be preferable to use a tape with a lower delamination force value and therefore to use lower percentages of EVA in the mixture of the polymeric layer 25.

The interaction between the layers of the splitting assembly 50 is due both to the adhesive degree and to the anchoring of ethylene vinyl acetate (EVA) on the aluminum layer, characteristics that are defined to guarantee the maintenance of the resistance of the coupling between the layers during the roll rotation process and at the same time guarantee the separation once the coupling of the two sheet materials of the rolls being processed has occurred.

The EVA adhesive degree is kept constant over time thanks to the barrier effect of aluminum which, as it is not porous, does not allow the polymer to penetrate inside it and therefore ensures that the interaction between the two remains constant.

Advantageously, the adhesive power of EVA is maintained constant over time even when coupled to the supporting layer made of polyester, thanks also to the surface finishing and the substantially planar face of the supporting layer.

Furthermore, the EVA layer has good structural resistance both at low and high process temperatures, good resistance to humidity and UV rays, so to guarantee the maintenance of its characteristics both during the storage of the adhesive tape and during the application, which can also take place at different humidity and temperature conditions of the processing environment.

The use of ethylene vinyl acetate (EVA) also allows to increase the flexibility and elasticity of the polymer layer 25.

The same chemical composition of EVA allows it to have values of elasticity and flexibility about three times higher than those of low density polyethylene (PE), having a maximum elongation equal to about 750%.

The characteristics of elasticity and flexibility are particularly advantageous since, during the splicing and coupling phase of the rolls, they allow to absorb the energy exchanged between the sheet materials B1 and B2. If the material were more rigid, indeed, it would not be as conformable to the roll on which it is applied.

As above anticipated, the coupling of the polymeric layer 25 to the metal face of the layer 15 is a hot coupling, in particular the polymer mixture is coextruded on the metal face of the supporting layer 15, and then laminated.

This hot lamination gives the splitting assembly 50 the characteristic coupling force required between the supporting layer 15 and the polymeric layer 25.

Therefore, the use of any adhesive substance is not required between the two surfaces to keep them coupled, nor any splitting substance to allow their splitting.

Advantageously, after the splitting step between the two layers 25 and 15; 16, nor the substantially planar face of the supporting layer 15; 16, nor the polymeric surface have any stickiness or residues of substances which could cause undesired adhesive interactions between operating components and damage the joined sheet material during processing.

In this way, any need for maintenance and/or machine downtime due to detaching substances or adhesive residues present on the spliced tape is avoided.

In the preferred embodiment the polymeric layer 25 has a thickness comprises between 25-35 µm and a weight of between 15-25 g/m².

As above anticipated, in a splicing operative step, a splitting force of the tape 100; 101 is determined by the chemical-physical interactions between the layers of the splitting assembly 50, in particular by the interactions between the polymeric layer 25 and the substantially planar face of the supporting layer 15, 16.

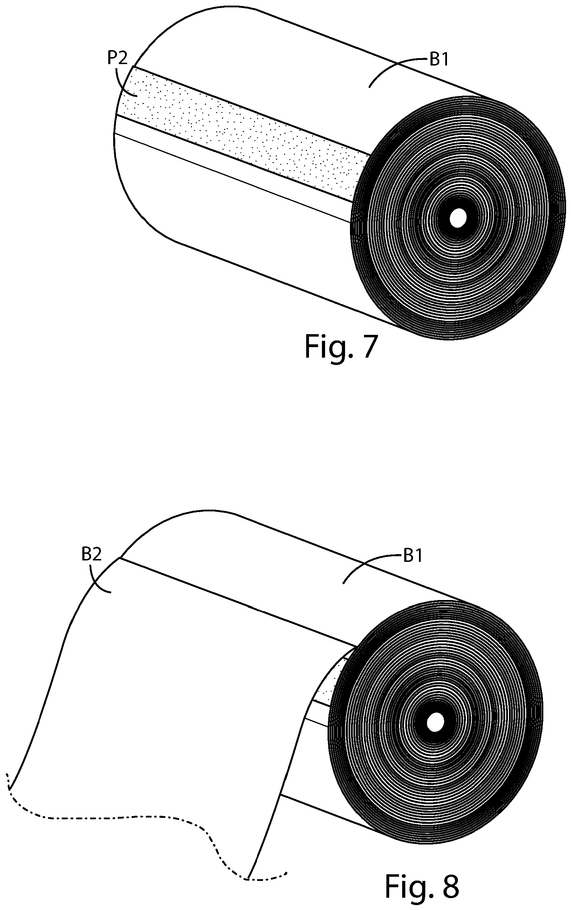

As shown in figures 8 and 9, when the assembly 50 is splitted, the polymeric layer 25 will remain coupled to the sheet material B1 of the expiring roll by means of the adhesive layer A1 below the polymeric layer 25, while the supporting layer 15; 16 will follow the further sheet material B2 through the adhesive layer A2 above the laminar element F1 in paper material.

Preferably, the polymeric layer 25 is transparent, in such a way as to visually impact in a minimal way on the new roll.

The presence of a laminar aluminum element allows, as already anticipated, an inductive detection of the splicing area and possibly its elimination at a later stage of the operating process.

The tape 100; 101 here described comprises at least one of the aforementioned first A1 and second A2 adhesive materials obtained by a PSA (Pressure Sensitive Adhesive) adhesive, preferably of water-soluble acrylic nature with excellent tack, i.e. with excellent adhesive characteristics in such a way as to allow, as anticipated above, the fixing of the ending edge of a new roll and the gluing with the high speed expiring roll.

The choice of the specific adhesive material depends on the material of the surfaces to be glued, and their chemical affinity. A complete adhesion of the adhesive layers to the respective sheet materials to be joined is required, in such a way as to guarantee the adhesive resistance and facilitate splitting assembly 50 separation, i.e. at the interface between the polymeric layer 25 and the supporting layer 15; 16 during a splicing operation for roll change.

An alternative embodiment, for example regarding the case of junction between paper material and polymeric sheet material, provides for example at least one of the aforementioned first A1 and second A2 adhesive materials made by means of a natural rubber-based adhesive comprising resins.

To facilitate the unwinding of the tape, the object according to the present invention comprises a layer of silicone paper coupled to at least one of the two adhesive materials A1 or A2.

As shown in Figure 1, the splicing tape 100; 101 according to the present invention comprises a layer of silicone paper 24 coupled to the second layer of adhesive material A2.

Advantageously, the layer of silicone paper 24 comprises a longitudinal notch, made along the entire extension of the layer itself, in such a way as to divide its width into a first 24' and a second 24" portion and allow a partial removal of said first and/or second portion of the paper being used, as will be better described below.

Preferably, the notch is made in such a way that, as shown in figures 1 to 3, the first portion 24' has a width equal to about one third of the total width of the tape and the second portion 24" has an equal width about two thirds of the total tape width.

Advantageously, a partial removal of the two portions 24' and 24" of silicone paper allows to define a first and a second portion, respectively P1 and P2, of the adhesive surface A2.

Preferably, as shown in the figures, the tape 100; 101 is applied in such a way as to guarantee a coupling area between the further sheet material B2 and the tape 100 (equal to the extension of the portion P2) greater than the coupling area between the tape and the sheet material B1 (equal to the extension of the portion P1). Therefore, the tape is applied on the roll B1 in such a way as to turn the portion 24' towards the terminal edge R of the roll B1.

As anticipated, in this way an adhesion value sufficient to allow the maintenance of the coupling between the tape and the further sheet material B2, during the automatic advancement of the further sheet material B2 in the direction of the dragging force V2, is guaranteed.

The present invention has been described by way of illustration, but not of limitation, according to its preferred embodiments, but it is to be understood that variations and/or modifications may be made by those skilled in the art without departing from the relative scope of protection, as defined by the attached claims.

## Claims

1. A splicing tape (100; 101) configured to splice an end edge portion (R) of a sheet material roll (B1) to a further sheet material (B2), said splicing tape (100; 101) comprising:
- a first layer of adhesive material (A1) configured to be coupled on a portion of the outer turn of the sheet material roll (B1);
- a second layer of adhesive material (A2) configured to be coupled to the further sheet material (B2);
- a splitting assembly (50), comprised between said first adhesive layer (A1) and said second adhesive layer (A2),
said splitting assembly (50) comprising a supporting layer (15; 16) and polymeric material layer (25), wherein said supporting layer (15; 16) comprises at least a substantially planar face and said polymeric layer (25) is coupled to said substantially planar face in a coupling configuration of the splicing tape (100; 101), said polymeric layer (25) comprising a polymeric mixture of ethylene vinyl acetate (EVA) and polyethylene (PE),
the overall configuration being such that when an external splitting force due to a dragging force, of the further sheet material (B2) acting on the splicing tape (100; 101), exceeds an adhesion force between said substantially planar face of said supporting layer (15; 16) and said polymeric layer (25), said splitting assembly (50) is split allowing the obtaining of a junction between the sheet material roll (B1) and the further sheet material (B2) by means of said second adhesive layer (A2), in such a way that said polymeric layer (25) and said supporting layer (15; 16) lie, respectively, on opposite faces of the obtained junction.

2. A splicing tape (100) according to the preceding claim, wherein said substantially planar face of said supporting layer (15) is made of metallic material.

3. A splicing tape (100) according to the preceding claim, wherein said supporting layer (15) comprises a laminar element (F1) made of paper material coupled to a further laminar element (F2) made of aluminum.

4. A splicing tape (100) according to the preceding claim, wherein said supporting layer (15) further comprises an adhesive material interposed between said laminar element (F1) made of paper material and said further laminar element (F2) made of aluminum.

5. A splicing tape (101) according to claim 1, wherein said supporting layer (16) is made of polymeric material, optionally polyester, more optionally polyethylene terephthalate (PET).

6. A splicing tape (100; 101) according to any of the preceding claims, wherein said polymeric mixture of said polymeric layer (25) comprises a percentage of ethylene vinyl acetate (EVA) comprised in a range of 2% to 15%.

7. A splicing tape (100; 101) according to any of the preceding claims, wherein said polymeric layer (25) has a thickness comprised in a range of 30µm to 35µm and a weight comprised in a range of 20g/m² to 25g/m².

8. A splicing tape (100; 101) according to any of the preceding claims, wherein at least one of said first layer of adhesive material (A1) and said second layer of adhesive material (A2) comprises a water-soluble adhesive or an adhesive based on natural rubber.

9. A splicing tape (100) according to any of the preceding claims, comprising a layer of silicone coated paper (24) coupled to said second layer of adhesive material (A2).

10. A splicing tape (100) according to the previous claim, wherein said layer of silicone coated paper (24) comprises a longitudinal notch realized along the entire extension of the layer, so as to divide the layer into a first (24') and in a second (24") portion and allowing a partial removal of said first and/or second portion of silicone coated paper (24).

11. Method to obtain a junction between a first sheet material and a second sheet material comprising the steps of:
- providing a splicing tape (100; 101) according to any one of the claims from 1 to 10;
- coupling the first adhesive layer (A1) on a portion of the outer turn of the sheet material roll (B1);
- coupling a first portion (P1) of the second adhesive layer (A2) to an ending edge portion of the sheet material roll (B1);
- coupling a second portion (P2) of the second adhesive layer (A2) to the further sheet material (B2);
so that when an external splitting force, due to a dragging force of the further sheet material (B2) acting on the splicing tape (100; 101), exceeds an adhesion force between said substantially planar face of said supporting layer (15; 16) and said polymeric layer (25), said splitting assembly (50) is split allowing the obtaining of a junction between the sheet material roll (B1) and the further material (B2) by means of said second adhesive layer (A2), in such a way that said polymeric layer (25) and said supporting layer (15; 16) lie, respectively, on opposite faces of the obtained junction.

## Patentansprüche

1. Spleißband (100; 101), das gestaltet ist, einen Endkatenabschnitt (R) einer Blattmaterialrolle (B1) an ein weiteres Blattmaterial (B2) zu spleißen, wobei das Spleißband (100; 101) umfasst:
- eine erste Schicht aus Klebematerial (A1), die gestaltet ist, an einen Abschnitt der Außenwicklung der Blattmaterialrolle (B1) gekoppelt zu werden;
- eine zweite Schicht aus Klebematerial (A2), die gestaltet ist, an das weitere Blattmaterial (B2) gekoppelt zu werden;
- eine Trennanordnung (50), die zwischen der ersten Klebeschicht (A1) und der zweiten Klebeschicht (A2) umfasst ist,
wobei die Trennanordnung (50) eine Trägerschicht (15; 16) und polymere Materialschicht (25) umfasst, wobei die Trägerschicht (15; 16) mindestens eine im Wesentlichen ebene Fläche umfasst und die polymere Schicht (25) an die im Wesentlichen ebene Fläche in einer Kopplungsausgestaltung des Spleißbands (100; 101) gekoppelt ist, wobei die polymere Schicht (25) ein polymeres Gemisch aus EthylenVinylacetat (EVA) und Polyethylen (PE) umfasst,
wobei die gesamte Ausgestaltung derart ist, dass, wenn eine externe Trennkraft aufgrund einer Schleppkraft des weiteren Blattmaterials (B2), die auf das Spleißband (100; 101) wirkt, eine Adhäsionskraft zwischen der im Wesentlichen ebenen Fläche der Trägerschicht (15; 16) und der polymeren Schicht (25) übersteigt, die Trennanordnung (50) getrennt wird, wodurch das Erhalten einer Verbindung zwischen der Blattmaterialrolle (B1) und dem weiteren Blattmaterial (B2) durch die zweite Klebeschicht (A2) ermöglicht wird, derart, dass die polymere Schicht (25) und die Trägerschicht (15; 16) jeweils an gegenüberliegenden Flächen der erhaltenen Verbindung liegen.

2. Spleißband (100) nach dem vorstehenden Anspruch, wobei die im Wesentlichen ebene Fläche der Trägerschicht (15) aus metallischem Material hergestellt ist.

3. Spleißband (100) nach dem vorstehenden Anspruch, wobei die Trägerschicht (15) ein Laminarelement (F1) umfasst, das aus Papiermaterial hergestellt ist, das an ein weiteres Laminarelement (F2) gekoppelt ist, das aus Aluminium hergestellt ist.

4. Spleißband (100) nach dem vorstehenden Anspruch, wobei die Trägerschicht (15) weiter ein Klebematerial umfasst, das zwischen dem Laminarelement (F1), das aus Papiermaterial hergestellt ist, und dem weiteren Laminarelement (F2), das aus Aluminium hergestellt ist, eingefügt ist.

5. Spleißband (101) nach Anspruch 1, wobei die Trägerschicht (16) aus polymerem Material, optional Polyester, optionaler Polyethylenterephthalat (PET) hergestellt ist.

6. Spleißband (100; 101) nach einem der vorstehenden Ansprüche, wobei das polymere Gemisch der polymeren Schicht (25) einen Prozentsatz von EthylenVinylacetat (EVY) in einem Bereich von 2% bis 15% umfasst.

7. Spleißband (100; 101) nach einem der vorstehenden Ansprüche, wobei die polymere Schicht (25) eine Dicke in einem Bereich von 30 µm bis 35 µm und ein Gewicht in einem Bereich von 20 g/m² bis 25 g/m² aufweist.

8. Spleißband (100; 101) nach einem der vorstehenden Ansprüche, wobei die mindestens eine der ersten Schicht aus Klebematerial (A1) und der zweiten Schicht aus Klebematerial (A2) einen wasserlöslichen Klebstoff oder einen Klebstoff auf der Basis von Naturkautschuk umfasst.

9. Spleißband (100) nach einem der vorstehenden Ansprüche, umfassend eine Schicht aus silikonbeschichtetem Papier (24), die an die zweite Schicht aus Klebematerial (A2) gekoppelt ist.

10. Spleißband (100) nach dem vorstehenden Anspruch, wobei die Schicht aus silikonbeschichtetem Papier (24) eine Längskerbe umfasst, die entlang der gesamten Ausdehnung der Schicht ausgebildet ist, um die Schicht in einen ersten (24') und in einen zweiten (24") Abschnitt zu teilen und eine teilweise Entfernung des ersten und/oder zweiten Abschnitts des silikonbeschichteten Papiers (24) zu ermöglichen.

11. Verfahren zum Erhalten einer Verbindung zwischen einem ersten Blattmaterial und einem zweiten Blattmaterial, umfassend die Schritte zum:
- Bereitstellen eines Spleißbands (100; 101) nach einem der Ansprüche 1 bis 10;
- Koppeln der ersten Klebeschicht (A1) an einem Abschnitt der Außenwicklung der Blattmaterialrolle (B1);
- Koppeln eines ersten Abschnitts (P1) der zweiten Klebeschicht (A2) an einen endenden Kantenabschnitt der Blattmaterialrolle (B1);
- Koppeln eines zweiten Abschnitts (P2) der zweiten Klebeschicht (A2) an das weitere Blattmaterial (B2);
sodass, wenn eine externe Trennkraft aufgrund einer Schleppkraft des weiteren Blattmaterials (B2), die auf das Spleißband (100; 101) wirkt, eine Adhäsionskraft zwischen der im Wesentlichen ebenen Fläche der Trägerschicht (15; 16) und der polymeren Schicht (25) übersteigt, die Trennanordnung (50) getrennt wird, wodurch das Erhalten einer Verbindung zwischen der Blattmaterialrolle (B1) und dem weiteren Blattmaterial (B2) durch die zweite Klebeschicht (A2) ermöglicht wird, derart, dass die polymere Schicht (25) und die Trägerschicht (15; 16) jeweils an gegenüberliegenden Flächen der erhaltenen Verbindung liegen.

## Revendications

1. Bande d'épissage (100 ; 101) configurée pour épisser une partie de bord d'extrémité (R) d'un rouleau de matériau en feuille (B1) à un matériau en feuille supplémentaire (B2), ladite bande d'épissage (100 ; 101) comprenant :
- une première couche de matériau adhésif (A1) configurée pour être couplée sur une partie de la spire externe du rouleau de matériau en feuille (B1) ;
- une seconde couche de matériau adhésif (A2) configurée pour être couplée au matériau en feuille supplémentaire (B2) ;
- un ensemble de séparation (50), compris entre ladite première couche adhésive (A1) et ladite seconde couche adhésive (A2),
ledit ensemble de séparation (50) comprenant une couche de support (15 ; 16) et une couche de matériau polymère (25), dans laquelle ladite couche de support (15 ; 16) comprend au moins une face sensiblement plane et ladite couche de polymère (25) est couplée à ladite face sensiblement plane dans une configuration de couplage de la bande d'épissage (100 ; 101), ladite couche de polymère (25) comprenant un mélange polymère d'éthylène-acétate de vinyle (EVA) et de polyéthylène (PE),
la configuration globale étant telle que lorsqu'une force de séparation externe, due à une force de traction du matériau en feuille supplémentaire (B2) agissant sur la bande d'épissage (100 ; 101), dépasse une force d'adhérence entre ladite face sensiblement plane de ladite couche de support (15 ; 16) et ladite couche de polymère (25), ledit ensemble de séparation (50) est séparé en permettant d'obtenir une jonction entre le rouleau de matériau en feuille (B1) et le matériau en feuille supplémentaire (B2) au moyen de ladite seconde couche adhésive (A2), de telle sorte que ladite couche de polymère (25) et ladite couche de support (15 ; 16) reposent, respectivement, sur des faces opposées de la jonction obtenue.

2. Bande d'épissage (100) selon la revendication précédente, dans laquelle ladite face sensiblement plane de ladite couche de support (15) est réalisée en un matériau métallique.

3. Bande d'épissage (100) selon la revendication précédente, dans laquelle ladite couche de support (15) comprend un élément laminaire (F1) réalisé en un matériau de papier couplé à un élément laminaire supplémentaire (F2) réalisé en aluminium.

4. Bande d'épissage (100) selon la revendication précédente, dans laquelle ladite couche de support (15) comprend en outre un matériau adhésif interposé entre ledit élément laminaire (F1) réalisé en un matériau de papier et ledit élément laminaire supplémentaire (F2) réalisé en aluminium.

5. Bande d'épissage (101) selon la revendication 1, dans laquelle ladite couche de support (16) est réalisée en un matériau polymère, facultativement en polyester, plus facultativement en polyéthylène téréphtalate (PET).

6. Bande d'épissage (100 ; 101) selon l'une quelconque des revendications précédentes, dans laquelle ledit mélange polymère de ladite couche de polymère (25) comprend un pourcentage d'éthylène-acétate de vinyle (EVA) compris dans une plage de 2 % à 15 %.

7. Bande d'épissage (100 ; 101) selon l'une quelconque des revendications précédentes, dans laquelle ladite couche de polymère (25) présente une épaisseur comprise dans une plage de 30 µm à 35 µm et un poids compris dans une plage de 20 g/m² à 25 g/m².

8. Bande d'épissage (100 ; 101) selon l'une quelconque des revendications précédentes, dans laquelle au moins l'une de ladite première couche de matériau adhésif (A1) et de ladite seconde couche de matériau adhésif (A2) comprend un adhésif soluble dans l'eau ou un adhésif à base de caoutchouc naturel.

9. Bande d'épissage (100) selon l'une quelconque des revendications précédentes, comprenant une couche de papier revêtu de silicone (24) couplée à ladite seconde couche de matériau adhésif (A2).

10. Bande d'épissage (100) selon la revendication précédente, dans laquelle ladite couche de papier revêtu de silicone (24) comprend une encoche longitudinale réalisée sur toute l'étendue de la couche, de manière à diviser la couche en une première (24') et en une seconde (24") partie et permettant un retrait partiel de ladite première et/ou de ladite seconde partie de papier revêtu de silicone (24).

11. Procédé pour obtenir une jonction entre un premier matériau en feuille et un second matériau en feuille comprenant les étapes consistant à :
- fournir une bande d'épissage (100 ; 101) selon l'une quelconque des revendications de 1 à 10 ;
- coupler la première couche adhésive (A1) sur une partie de la spire extérieure du rouleau de matériau en feuille (B1) ;
- coupler une première partie (P1) de la seconde couche adhésive (A2) à une partie de bord d'extrémité du rouleau de matériau en feuille (B1) ;
- coupler une seconde partie (P2) de la seconde couche adhésive (A2) au matériau en feuille supplémentaire (B2) ;
de sorte que lorsqu'une force de séparation externe, due à une force de traction du matériau en feuille supplémentaire (B2) agissant sur la bande d'épissage (100 ; 101), dépasse une force d'adhérence entre ladite face sensiblement plane de ladite couche de support (15 ; 16) et ladite couche de polymère (25), ledit ensemble de séparation (50) est séparé permettant l'obtention d'une jonction entre le rouleau de matériau en feuille (B1) et le matériau supplémentaire (B2) au moyen de ladite seconde couche adhésive (A2), de telle sorte que ladite couche de polymère (25) et ladite couche de support (15 ; 16) reposent, respectivement, sur des faces opposées de la jonction obtenue.
